## Europäisches Patentamt
## European Patent Office
## Office européen des brevets

(11) Veröffentlichungsnummer: **0 314 941**
**A2**

(12) **EUROPÄISCHE PATENTANMELDUNG**

(21) Anmeldenummer: 88116742.3

(22) Anmeldetag: 10.10.88

(51) Int. Cl.⁴: **C08K 3/26 , C08L 81/02 , C08K 3/34 , C08K 3/40**

(30) Priorität: 20.10.87 DE 3735465

(43) Veröffentlichungstag der Anmeldung: 10.05.89 Patentblatt 89/19

(84) Benannte Vertragsstaaten: BE CH DE FR GB IT LI

(71) Anmelder: **BAYER AG Konzernverwaltung RP Patentabteilung D-5090 Leverkusen 1 Bayerwerk(DE)**

(72) Erfinder: **Wehnert, Wolfgang, Dr. Bodelschwinghstrasse 14 D-4150 Krefeld(DE)**
Erfinder: **Köhler, Karl-Heinz, Dr. Buschstrasse 165 D-4150 Krefeld(DE)**
Erfinder: **Reinking, Klaus, Dr. Robert-Stolz-Strasse 16 b D-5632 Wermelskirchen 1(DE)**
Erfinder: **Tresper, Erhard, Dr. Moerser Strasse 394 D-4150 Krefeld 11(DE)**

(54) **Polyphenylensulfid-Formmassen mit verbesserter Farbstabilität.**

(57) Die Erfindung betrifft kristalline, thermoplastische Formmassen aus Polyarylensulfiden, insbesondere aus Polyphenylensulfid (PPS) und Magnesiumcarbonat. Die Formmassen weisen eine erhöhte Farbstabilität auch bei Temperaturlagerung an Luftsauerstoff auf.

EP 0 314 941 A2

EP 0 314 941 A2

## Polyphenylensulfid-Formmassen mit verbesserter Farbstabilität

Die Erfindung betrifft kristalline, thermoplastische Formmassen aus Polyarylensulfiden, insbesondere aus Polyphenylensulfid (PPS) und Magnesiumcarbonat. Die Formmassen weisen eine erhöhte Farbstabilität auch bei Temperaturlagerung an Luftsauerstoff auf.

Polyphenylensulfide sind aufgrund ihrer thermischen und mechanischen Eigenschaften, sowie ihrer guten chemischen Beständigkeit wertvolle Ausgangsmaterialien zur Herstellung von Fasern, Folien und Formkörpern. Sie finden insbesondere Anwendung im Elektro- und Elektroniksektor, da sie flammfest und dimensionsstabil sind und eine hohe Dauertemperaturbeständigkeit, sowie gute elektrische Eigenschaften aufweisen.

Bei längerer, hoher thermischer Belastung von Formteilen aus Polyphenylensulfid, insbesondere in Luftsauerstoff-Atmosphäre können dennoch unerwünschte Dunkelfärbungen an der Formteil-Oberfläche auftreten. Der Effekt wirkt sich besonders nachteilig bei hellen Formmassen aus. Derartige Farbänderungen von Formteilen im Dauereinsatz bei höherer Gebrauchstemperatur sind bei bestimmten Einsatzgebieten unerwünscht.

Es bestand daher die Forderung, Polyphenylensulfide herzustellen, die gegebenenfalls durch anorganische Füllstoffe verstärkt sein können, und die nicht nur eine möglichst helle Farbe nach der thermoplastischen Verarbeitung, sondern insbesondere eine verbesserte Farbstabilität bei höherer Dauertemperaturbelastung aufweisen. Dabei sollten die typischen mechanischen und thermischen Eigenschaften des Polyphenylensulfids weitgehend erhalten bleiben.

Es ist bekannt, bestimmt nachteilige Eigenschaften des Polyphenylensulfids durch Zusätze von Metallsalzen zu mindern. So wird z. B. das Korrosionsverhalten von PPS gegenüber Kupfer und Spritzgußformmaterialien durch Zusatz von Oxiden verschiedener Metalle verbessert (z. B. EP-OS 67 676). Insbesondere Hydroxyde und Carbonate von Alkalimetallen haben sich als wirksam erwiesen, während Erdalkalicarbonate (z. B. $CaCO_3$) die Korrosion kaum beeinflussen (z. B. US-PS 4 017 450).

Es wurde nun gefunden, daß aus der Gruppe der Alkali-und Erdalkalicarbonate, insbesondere Magnesiumcarbonat als Zusatz zu PPS die Herstellung farbheller Formmassen ermöglicht, deren Farbstabilität auch bei Dauertemperaturbelastung deutlich verbessert ist.

Polyphenylensulfidformmassen, die Magnesiumcarbonat enthalten, lassen sich problemlos zu Formkörpern mit einwandfreier Oberfläche verarbeiten, die eine helle Eigenfarbe, auch nach längerer Temperung an Luftsauerstoff behalten, und die gute mechanische und thermische Eigenschaften besitzen. Darüber hinaus sind die bei höherer Temperatur auftretenden Korrosionserscheinungen gemindert.

Gegenstand der Erfindung sind daher thermoplastisch verarbeitbare Formmassen aus:

a) 20 bis 99,95 Gew.-%, vorzugsweise 27 bis 99,9 Gew. -%, bezogen auf die Summe aus a) + b) + c) eines Polyarylensulfids (A) mit einer Schmelzviskosität von mindestens 2 Pa. s (gemessen bei 306 °C und einem Schergefälle von $10^3 sec^{-1}$) und

b) 0,05 bis 10 Gew. -%, vorzugsweise 0,1 bis 3 Gew. -%, bezogen auf die Summe aus a) + b) + c) eines Magnesiumcarbonats (B) und

c) 0 bis 70 Gew. -% bezogen auf die Summe a) + b) + c) an anorganischen Füll- und Verstärkungsstoffen (C).

Das erfindungsgemäß modifizierte Polyarylensulfid, vorzugsweise PPS, kann auf übliche Weise zu Formmassen verarbeitet werden. So können die Komponenten a) und b) und gegebenenfalls c), z. B. in der Schmelze in einem Extruder oder Kneter homogenisiert werden.

Die erfindungsgemäß eingesetzten Polyarylensulfide (A) sind bekannt (z. B. US-PS 33 54 129, EP-OS 171 021). Bevorzugt sind lineare, unverzweigte Polyphenylensulfide mit einer Schmelzviskosität (306 °C, $10^3 sec^{-1}$) von 2 bis 1.000 Pa. s, besonders bevorzugt von 20 bis 700 Pa. s.

Das erfindungsgemäß eingesetzte Magnesiumcarbonat (B) kann eine oder mehrere Verbindungen aus der Gruppe folgender Substanzklassen sein:

a) Neutralcarbonate der Formel (I)

$MgCO_3$ x n $H_2O$ (n = 0,2,3,5)     (I),

z.B. das natürlich vorkommende Magnesit (n = 0) oder das synthetisch hergestellte $MgCO_3$ x 3 $H_2O$ (z.B. "Ullmann, Enzyklopädie der technischen Chemie", 4. Auflage, 1983, Band 16, S. 338) und/oder

b) basische Carbonate bzw. Magnesiumhydroxydcarbonate der Formeln (II) und (III) wie

$MgCO_3$ x $Mg(OH)_2$ x3$H_2O$     (11) und

$4MgCO_3$ x $Mg(OH)_2$ x n $H_2O$ (n = 4,5,8)     (III).

2

Diese können z.B. auch synthetisch hergestellt werden (z.B. Kirk-Othmer, Enzyclopedia of Chemical Technologie", 3. Auflage, 1981, Band 14, S. 618 -621).

Bevorzugte Carbonate sind Neutralcarbonate der Formel (I) mit n = 3 und basische Carbonate der Formel (III) mit n = 4 und 5. Besonders bevorzugt sind basische Carbonate.

Die erfindungsgemäßen Formmassen können neben den Komponenten (A) und (B) übliche Füll - und Verstärkungsstoffe (C) enthalten, z.B. Glasfasern, Kohlefasern, Aramidfasern und faserige anorganische Materialien, wie z. B, Glasmatten usw..

Beispiele für Füllstoffe sind Mineralien, z. B. Quarzmehl, Kaolin, Talkum, Kreide, Calciumsulfat, Zinksulfid, Glimmer, Calciumcarbonat, Titandioxid usw. Bevorzugte Verstärkungsstoffe sind Glasfasern, bevorzugte Füllstoffe sind Quarz, Talkum, Kaolin usw..

Weiterhin können die erfindungsgemäßen Formmassen übliche Verarbeitungshilfsmittel, Farbmittel und weitere Stabilisatoren enthalten.

Die erfindungsgemäßen Formmassen eignen sich für Anwendungen im Elektro- und Elektronikbereich, insbesondere für sichtbare Bauteile, die in hellen Farben ihr Aussehen bei Temperaturbelastung nicht nennenswert ändern und keine Oberflächenstörungen zeigen dürfen.

## Beispiele

## Eingesetzte Komponenten

A) Polyphenylensulfid mit einer Schmelzviskosität von 55 Pa. s (306° C, Schubspannung $\gamma$ = $10^3$sec $^{-1}$), hergestellt z. B. analog EP-OS 171 021, Beispiel 1,

B) geschlichtete, handelsübliche 6 mm Glasfaser mit Faserdurchmesser von ca. 10 $\mu$m,

C) Talkum (handelsüblich),

D) basisches Magnesiumcarbonat, entsprechend Formel III mit n = 4,

E) $Li_2CO_3$ p.a. (Fa. Merck)

F) $K_2CO_3$ p.a. (Fa. Merck)

## Herstellung und Prüfung der Formmassen

Die Komponenten wurden entsprechend der Zusammensetzung der Formmassen (s. Tabelle) auf einem Zweiwellenextruder der Firma Werner und Pfleiderer (ZSK 32) in der Schmelze bei 300 - 320° C vermischt und homogenisiert. Das getrocknete Stranggranulat wurde auf üblichen Spritzgußmaschinen zu Norm-Prüfkörpern der Kantenlänge 80 x 10 x 4 mm verspritzt (Formtemperatur : 140° C, Massetemperatur 320° C).

Ein Teil der Formkörper wurde in einem Umlufttrockenschrank 72 Stunden bei 250° C gelagert.

Tabelle

| Beispiel | Komponenten (Gew.-%) | | | | | | Farbbeurteilung* | | |
|---|---|---|---|---|---|---|---|---|---|
| | A | B | C | D | E | F | Spritz-frisch | getem-pert | Farbkon-stanz |
| Standard | 52 | 45 | 3 | - | - | - | quarz-grau 7039 | sepia-braun 8014 | gering |
| Beisp. 1 | 52 | 45 | 2,7 | 0,3 | - | - | stein-grau 7030 | grau-beige 1019 | hoch |
| Beisp. 2 | 52 | 45 | 2,0 | 1,0 | - | - | stein-grau 7030 | grau-beige 1019 | hoch |
| Vergl. 1 | 52 | 45 | 2,7 | - | 0,3 | - | quarz-grau 7039 | sepia-braun 8014 | gering |
| Vergl. 2 | 52 | 45 | 2,0 | - | 1,0 | - | quarz-grau 7039 | sepia-braun 8014 | gering |
| Vergl. 3 | 52 | 45 | 2,7 | - | - | 0,3 | umbra-grau 7022 | blaß-braun 8025 | sehr gering |
| Vergl. 4 | 52 | 45 | 2,0 | - | - | 1,0 | umbra-grau 7022 | beige 1001 | sehr gering |

Die erfindungsgemäßen Beispiele machen deutlich, daß mit Magnesiumcarbonat farbhelle Formmassen erhalten werden, die ihren Farbton bei Temperaturbelastung nur wenig ändern.

* Begriffe und Farbnummern nach Farbregister RAL 840 HR
  (Herausgeber: RAL, Deutsches Institut für Gütesicherung
  und Kennzeichnugn e. V.
  Bornheimer Str. 180, Bonn)

**Ansprüche**

Thermoplastisch verarbeitbare Formmassen aus:

a) 20 bis 99,95 Gew. -% vorzugsweise 27 bis 99,9 Gew.-%, bezogen auf die Summe aus a) + b) + c) eines Polyarylensulfids (A) mit einer Schmelzviskosität von mindestens 2 Pa. s (gemessen bei 306 °C und einem Schergefälle von $10^3$ sec$^{-1}$) und

b) 0,05 bis 10 Gew. -%, vorzugsweise 0,1 bis 3 Gew. -%, bezogen auf die Summe aus a) + b) + c) eines Magnesiumcarbonats (B) und

c) 0 bis 70 Gew. -%, bezogen auf die Summe a) + b) + c) an anorganischen Füll - und Verstärkungsstoffen (C).